Europäisches Patentamt

**European Patent Office**

Office européen des brevets

(11) Numéro de publication: **0 092 452**
**A1**

# (12) DEMANDE DE BREVET EUROPEEN

(21) Numéro de dépôt: 83400632.2

(51) Int. Cl.³: **F 24 J 3/02**

(22) Date de dépôt: 25.03.83

(30) Priorité: 31.03.82 FR 8205531

(71) Demandeur: **COMMISSARIAT A L'ENERGIE ATOMIQUE Etablissement de Caractère Scientifique Technique et Industriel, 31/33, rue de la Fédération, F-75015 Paris (FR)**

(43) Date de publication de la demande: 26.10.83
Bulletin 83/43

(72) Inventeur: **Aubert, André, 16, Place Jean Moulin, F-38000 Grenoble (FR)**
Inventeur: **Valignat, Jean, 5 Bis, Avenue de Glères Poisat, F-38320 Eybens (FR)**
Inventeur: **Wyon, Christophe, 108, Avenue Gabriel Péri, F-38400 Saint Martin d'Heres (FR)**

(84) Etats contractants désignés: **BE CH DE GB IT LI NL SE**

(74) Mandataire: **Mongrédien, André et al, c/o BREVATOME 25, rue de Ponthieu, F-75008 Paris (FR)**

(54) **Revêtement pour la conversion photothermique.**

(57) Revêtement pour la conversion photothermique.

Il comprend un substrat (3) réflecteur du rayonnement infrarouge, une première couche (4) déposée sur ce substrat et constituée d'un matériau métallique, et une seconde couche (5) déposée sur la première couche et constituée d'un matériau amorphe absorbant le rayonnement solaire, tel que le carbone amorphe. Le substrat peut être constitué d'une couche (1) réflectrice du rayonnement infrarouge, déposée sur un substrat primaire (2).

Application à la conversion photothermique de l'énergie solaire.

La présente invention concerne un revêtement pour la conversion photothermique. Elle s'applique notamment à la conversion photothermique de l'énergie solaire.

On sait que les surfaces dites "sélectives" sont de plus en plus utilisées pour la conversion photothermique de l'énergie solaire car elles permettent d'améliorer notablement les rendements de conversion. Ces surfaces sont telles qu'elles s'échauffent en absorbant le rayonnement solaire incident tout comme un corps noir, mais à la différence de ce dernier, elles n'émettent que très peu de rayonnement infrarouge ; leurs pertes thermiques sont donc minimisées. Parmi les différentes méthodes connues pour les élaborer, celle qui est la plus employée actuellement consiste à déposer une couche mince d'un matériau absorbant le rayonnement solaire sur une couche peu émissive c'est-à-dire réflectrice du rayonnement infrarouge.

Deux grands groupes de techniques sont actuellement utilisés pour déposer la couche mince du matériau absorbant :
- les techniques de dépôt en phase liquide (dépôts chimique et électrolytique, dépôts par immersion ...), et
- les techniques de dépôt en phase vapeur (évaporation sous vide, pulvérisation cathodique ...).

Les techniques du deuxième groupe sont généralement plus délicates à mettre en oeuvre que celles du premier groupe, mais en contrepartie elles offrent la possibilité d'élaborer des matériaux composites qu'il serait très difficile, voire impossible, d'obtenir par les techniques de dépôt en phase liquide.

Néanmoins, les techniques du premier et du deuxième groupes ont un point en commun : à l'aide de ces techniques, on cherche en général à réaliser une couche mince absorbante de type "cermet", qui est une très fine dispersion d'une phase à caractère métallique dans une matrice à caractère diélectrique, et, pour accroître encore les propriétés absorbantes dudit cermet, on fait en sorte que sa composition soit variable dans son épaisseur ; ainsi cherche-t'on à obtenir un cermet à caractère plutôt métallique à l'interface avec la couche réflectrice du rayonnement infrarouge et à caractère plutôt diélectrique à l'interface avec le milieu ambiant (l'air) pour obtenir un cermet dit "gradué".

Les propriétés optiques de nombreux cermets sont maintenant bien connues et largement publiées dans la littérature. A titre d'exemple, on peut citer les cermets obtenus par pulvérisation cathodique réactive d'une cible d'acier inoxydable dans une atmosphère résiduelle d'argon et d'acétylène. Des cermets de ce type sont par exemple envisagés, dans le brevet des Etats Unis d'Amérique n°4309261 et dans une communication intitulée "In line production system for sputter deposition of graded index solar absorbing films", faite par D.R. Mc Kenzie et al. au 8e Congrès International du Vide, Cannes, septembre 1980.

Outre le fait que la pulvérisation cathodique réactive est beaucoup plus complexe à maîtriser que la pulvérisation cathodique non réactive en raison, entre autres, du gradient de pression du gaz réactif à maintenir dans la chambre de pulvérisation, les couches du type indiqué dans le paragraphe précédent, obtenues par pulvérisation cathodique réactive, contiennent une proportion importante d'hydrogène, comme cela est indiqué dans l'article intitulé "Properties of hydrogenated carbon films produced by reactive magnetron sputtering", par D.R. Mc Kenzie et al., publié dans Solar Energy Materials, 6 (1981) 97-106.

Cette présence d'hydrogène dans la couche déposée est un handicap pour la réalisation d'un capteur sous vide pour la conversion photothermique, car elle rend plus difficiles les opérations de dégazage à effectuer au cours de ladite réalisation. Par ailleurs, la désorption de cet hydrogène au cours d'un traitement thermique, semble être l'une des causes importantes de la dégradation des propriétés optiques des cermets gradués réalisés à partir d'acier inoxydable et de carbone.

On connaît également des revêtements pour la conversion photothermique obtenus par une autre technique qui consiste à déposer une couche de graphite sur une couche réflectrice du rayonnement infrarouge, cette couche réflectrice étant elle-même déposée sur un substrat et pouvant être réalisée en cuivre, en argent, en nickel ou en titane. Cette technique est rapportée dans l'article intitulé "Effect of substrate on graphite and other solar selective surfaces", par D.R. Mc Kenzie, publié dans la revue Applied Optics, vol 17, n° 12 (1978), pages 1984 à 1988. Elle est beaucoup plus simple que la technique de pulvérisation cathodique réactive, donc beaucoup plus facilement maîtrisable, car elle ne fait appel qu'à la superposition de deux couches élémentaires homogènes. Par ailleurs, ces couches sont exemptes d'atomes étrangers nuisibles tels que des atomes d'hydrogène, en raison de la technique employée pour déposer la couche de graphite, à savoir une évaporation sous vide par canon à électrons.

Malheureusement, les couches de graphite obtenues par cette technique ne sont pas suffisamment absorbantes pour prétendre véritablement à des applications industrielles. En effet, leur facteur d'absorption solaire n'est que de 0,70 pour du graphite déposé sur du cuivre et de 0,80 pour du graphite déposé sur du titane.

0092452

La présente invention a pour objet un revêtement pour la conversion photothermique ne présentant pas les inconvénients des revêtements connus que l'on vient d'indiquer, notamment en ce qu'il est réalisable de façon simple et comporte des couches stables thermiquement, exemptes d'hydrogène et dont le facteur d'absorption solaire peut être égal ou supérieur à 0,90.

De façon précise, la présente invention a pour objet un revêtement pour la conversion photothermique, caractérisé en ce qu'il comprend :
- un substrat réflecteur du rayonnement infrarouge,
- une première couche déposée sur ledit substrat et constituée d'au moins un composé métallique, et
- une seconde couche déposée sur ladite première couche, cette seconde couche étant constituée d'un matériau amorphe et étant apte à absorber le rayonnement solaire.

Selon une caractéristique particulière du revêtement objet de l'invention, ledit substrat est composé d'une couche réflectrice du rayonnement infrarouge et d'un substrat primaire, ladite couche réflectrice du rayonnement infrarouge étant déposée sur ledit substrat primaire.

En d'autres termes, les première et seconde couches peuvent être déposées sur un substrat massif, réflecteur du rayonnement infrarouge, ou sur une couche réflectrice du rayonnement infrarouge, préalablement déposée sur un substrat dit "primaire".

Ce n'est que grâce à l'emploi d'une couche métallique, entre le substrat réflecteur du rayonnement infrarouge et la couche absorbante (seconde couche), et à l'emploi d'une telle couche absorbante, amorphe et non pas cristallisée (contrairement au graphite qui a une structure cristalline), qu'il est possible d'obtenir un revêtement ayant un facteur de réflexion élevé, tout en conservant un très faible facteur d'émission dans l'infrarouge. Le substrat réflecteur du rayonnement infrarouge peut être par exemple constitué de cuivre, d'argent ou d'or.

Selon une autre caractéristique particulière du revêtement objet de l'invention, la première couche est réalisée à partir d'au moins l'un des matériaux pris dans le groupe comprenant les métaux de transition et leurs alliages. La première couche est par exemple réalisée à partir d'acier inoxydable pour des raisons de simplicité de mise en oeuvre et d'économie.

Selon une autre caractéristique particulière, la première couche a une épaisseur de l'ordre de quelques dizaines de nanomètres, par exemple de l'ordre de 10 à 50 nm.

Selon une autre caractéristique particulière, la seconde couche est une couche de carbone amorphe.

Selon une caractéristique préférée, la seconde couche a une épaisseur supérieure ou égale à celle de la première couche, par exemple une épaisseur de l'ordre de 50 à 150 nm.

Selon une autre caractéristique particulière, la première et la seconde couches sont déposées par pulvérisation cathodique.

Enfin, selon une autre caractéristique particulière, lorsque ledit substrat est composé de ladite couche réflectrice du rayonnement infrarouge sur ledit substrat primaire, cette couche réflectrice du rayonnement infrarouge et lesdites première et seconde couches sont déposées par pulvérisation cathodique.

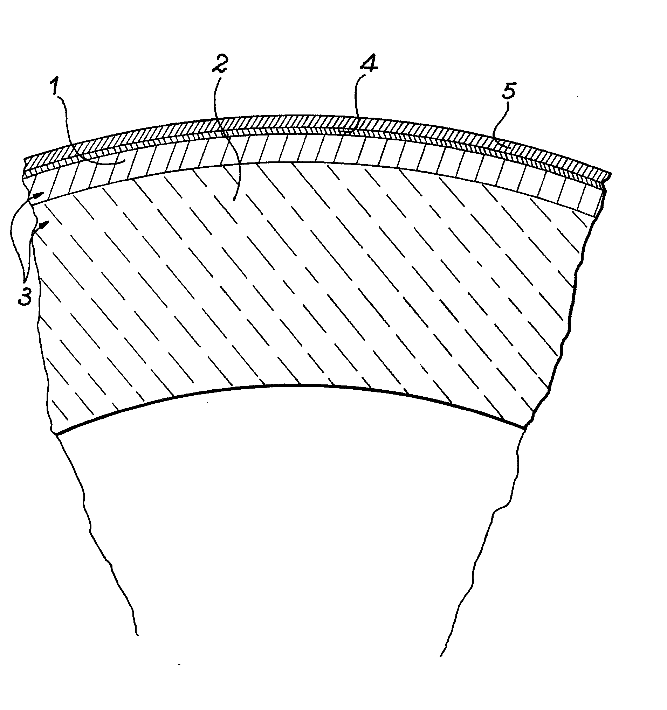

D'autres caractéristiques et avantages du revêtement pour la conversion photothermique objet de l'invention apparaîtront mieux à la lecture de la description qui suit d'un exemple de réalisation donné à titre indicatif et non limitatif, en référence au dessin annexé qui représente schématiquement une partie d'un revêtement selon l'invention.

Dans cet exemple de réalisation, le revêtement selon l'invention comporte une couche 1 réflectrice du rayonnement infrarouge, déposée sur un substrat primaire 2, de façon à former un substrat 3 réflecteur du rayonnement infrarouge, et une première couche 4 ainsi qu'une seconde couche 5, successivement déposées sur ladite couche réflectrice du rayonnement infrarouge.

On dépose successivement les différentes couches sur le substrat primaire par pulvérisation cathodique dans un gaz inerte tel que l'argon. Ainsi dépose-t'on d'abord sur le substrat primaire par exemple formé d'un verre en borosilicate (commercialisé sous la marque PYREX), la couche réflectrice du rayonnement infrarouge, couche mince faite par exemple de cuivre de préférence à l'argent ou à l'or qui sont des métaux coûteux. On dépose ensuite successivement une première couche métallique puis une seconde couche amorphe, couches très minces et homogènes, destinées à constituer un revêtement très sélectif en association avec la couche de cuivre.

La première couche est obtenue par dépôt d'une très mince pellicule métallique d'épaisseur comprise entre 10 et 50 nm. Pour ce faire, le matériau utilisé est par exemple un acier inoxydable, pour des raisons de simplicité de mise en oeuvre et de coût.

La seconde couche est ensuite obtenue par pulvérisation cathodique d'une cible en carbone dans une atmosphère résiduelle d'argon. Cette seconde couche, ainsi constituée de carbone amorphe, a de préférence une épaisseur au moins égale à celle de la première couche. L'épaisseur de cette seconde couche est par exemple comprise entre 50 et 150 nm.

B 7556-3 PV

Le revêtement obtenu possède, outre une grande stabilité thermique, des propriétés optiques très intéressantes pour la conversion photothermique de l'énergie solaire. En effet, il est possible d'obtenir, en procédant comme on vient de l'indiquer, des revêtements dont le facteur d'absorption est supérieur ou égal à 0,90 et dont le facteur d'émission reste inférieur ou égal à 0,05.

A titre explicatif et non limitatif, on peut se placer dans les conditions expérimentales suivantes pour réaliser,avec une installation de pulvérisation cathodique pour dépôts sur substrats cylindriques, installation connue dans l'état de la technique et encore appelée dispositif magnétron cylindrique, un revêtement selon l'invention, sur un tube en "PYREX" de 28 mm de diamètre servant de substrat primaire :

- Notations :

1) Nature de la cathode

2) Pression d'argon

3) Densité de courant cathodique

4) Tension de pulvérisation

5) Durée de la pulvérisation

6) Epaisseur du dépôt

- Dépôt de la couche réflectrice du rayonnement infra-rouge :

1) En cuivre

2) Entre $6.10^{-3}$ et $2.10^{-2}$ Torr Optimum $10^{-2}$ Torr

3)  " 5 " 8 $mA/cm^2$ " 6,0 $mA/cm^2$

4)         " 500 V

5)  " 45 " 65 s " 55 s

6)  " 350 " 550 nm " 450 nm

- Dépôt de la première couche :

1) En acier inoxydable

2) Entre $6.10^{-3}$ et $2.10^{-2}$ Torr Optimum $10^{-2}$ Torr

3)  " 5 " 20 $mA/cm^2$ " 10 $mA/cm^2$

4)                          "      580 V

5)    "    2,5    "      12 s      "      5,5 s

6)    "      10    "      50 nm      "      22,5 nm

- Dépôt de la seconde couche, réalisée à partir de carbone :

1) En carbone

2) Entre $6.10^{-3}$ et $2.10^{-2}$ Torr      Optimum $10^{-2}$ Torr

3)    "      5    "      8 $mA/cm^2$      "      6 $mA/cm^2$

4)                          "      650 V

5)    "      55    "      165 s      "      90 s

6)    "      50    "      150 nm      "      80 nm

On obtient, dans les conditions ci-dessus et par une technique très simple à mettre en oeuvre par l'homme de l'art, un revêtement qui a les propriétés suivantes :

- Facteur d'absorption solaire : 0,91
- Facteur d'émission          : 0,04

Dans les mêmes conditions expérimentales que précédemment, on peut réaliser le revêtement en disposant directement la couche d'acier inoxydable et la couche de carbone amorphe sur un tube poli réflecteur du rayonnement infrarouge et par exemple en cuivre, sans utiliser le substrat primaire en "PYREX".

Bien entendu, l'invention ne concerne pas uniquement des revêtements pour la conversion photothermique, déposés sur des substrats tubulaires ou cylindriques. Elle concerne également des revêtements réalisés, par pulvérisation cathodique, sur des substrats de diverses formes, en utilisant pour ce faire des électrodes adaptées, réalisables par l'homme de l'art. Par exemple, dans le cas d'un substrat plan, ce substrat est maintenu par un porte-substrat et une cathode est disposée parallèlement au substrat, en regard de celui-ci.

Enfin, l'invention n'est pas limitée à des revêtements obtenus par pulvérisation cathodique. Pour déposer la couche absorbante, par exemple en carbone amorphe, ou peut utiliser toutes les méthodes connues dans l'état de la technique telles que l'évaporation ou le dépôt chimique en phase vapeur en présence de plasma.

0092452

## REVENDICATIONS

1. Revêtement pour la conversion photothermique, caractérisé en ce qu'il comprend :
- un substrat (3) réflecteur du rayonnement infrarouge,
- une première couche (4) déposée sur ledit substrat et constituée d'au moins un composé métallique, et
- une seconde couche (5) déposée sur ladite première couche, cette seconde couche étant constituée d'un matériau amorphe et étant apte à absorber le rayonnement solaire.

2. Revêtement selon la revendication 1, caractérisé en ce que ledit substrat (3) est composé d'une couche (1) réflectrice du rayonnement infrarouge et d'un substrat primaire (2), ladite couche réflectrice du rayonnement infrarouge étant déposée sur ledit substrat primaire.

3. Revêtement selon la revendication 2, caractérisé en ce que la couche (1) réflectrice du rayonnement infrarouge est constituée de l'un des matériaux pris dans le groupe comprenant le cuivre, l'argent et l'or.

4. Revêtement selon l'une quelconque des revendications 1 à 3, caractérisé en ce que la première couche (4) est réalisée à partir d'au moins l'un des matériaux pris dans le groupe comprenant les métaux de transition et leurs alliages.

5. Revêtement selon la revendication 4, caractérisé en ce que la première couche (4) est réalisée à partir d'acier inoxydable.

6. Revêtement selon l'une quelconque des revendications 1 à 5, caractérisé en ce que la première couche (4) a une épaisseur de l'ordre de 10 à 50 nm.

7. Revêtement selon l'une quelconque des revendications 1 à 6, caractérisé en ce que la seconde couche (5) est une couche de carbone amorphe.

B 7556-3 PV

8. Revêtement selon l'une quelconque des revendications 1 à 7, caractérisé en ce que la seconde couche (5) a une épaisseur supérieure ou égale à celle de la première couche.

9. Revêtement selon la revendication 8, caractérisé en ce que la seconde couche (5) a une épaisseur de l'ordre de 50 à 150 nm.

10. Revêtement selon l'une quelconque des revendications 1 à 9, caractérisé en ce que la première (4) et la seconde (5) couches sont déposées par pulvérisation cathodique.

11. Revêtement selon la revendication 2, caractérisé en ce que ladite couche (1) réflectrice du rayonnement infrarouge et lesdites première (4) et seconde (5) couches sont déposées par pulvérisation cathodique.

0092452

Office européen
des brevets

**RAPPORT DE RECHERCHE EUROPEENNE**

Numéro de la demande

EP  83 40 0632

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | TRANSACTIONS OF THE ASME, JOURNAL OF ENGINEERING FOR POWER; vol. 87, juillet 1965, pages 277-280 R.L. LONG: "A review of recent air force research on selective solar absorbers" * Page 279, colonne de gauche, lignes 38-48 * | 1,4 | F 24 J   3/02 |
| | --- | | |
| A | FR-A-2 354 521  (UNIVERSITY OF SYDNEY) * Page 5, lignes 37-40; page 6, lignes 1-18 * | 1-4,6, 11 | |
| | --- | | |
| A | US-A-4 098 956  (BLICKENSDERFER) * En entier * | 1-4,6-11 | |
| | --- | | **DOMAINES TECHNIQUES RECHERCHES (Int. Cl. 3)** |
| A | FR-A-2 364 273  (BALZERS) * En entier * | 7,10, 11 | F 24 J C 23 C |
| | --- | | |
| A | FR-A-2 340 516  (PHILIPS) * Page 3, lignes 20-40; figure 1 * | 7 | |
| | --- | | |
| A | FR-A-2 354 393  (UNIVERSITY OF SYDNEY) * Page 7, lignes 30-35; page 8, lignes 1-3 * | 5 | |
| | ---                     -/- | | |

Le présent rapport de recherche a été établi pour toutes les revendications

| Lieu de la recherche | Date d'achèvement de la recherche | Examinateur |
|---|---|---|
| LA HAYE | 21-06-1983 | PERROTTA A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

Office européen
des brevets

**RAPPORT DE RECHERCHE EUROPEENNE**

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl. 3) |
|---|---|---|---|
| A | THIN SOLID FILMS, vol. 45, avril 1977, pages 397-406, Elsevier Sequoia S.A., Lausanne, CH. J.A. THORNTON et al.: "Sputtered austenitic manganese steel" * Page 397, premier paragraph * | 5 | |
| A | WO-A-8 200 510 (OWENS) * Page 9, ligne 1 - page 10, ligne 26 * | 5 | |
| P,X | US-A-4 334 523 (SPANOUDIS) * Résumé; colonne 3, lignes 33-68; colonne 4, lignes 1-65; colonne 5, lignes 53-61; colonne 6, lignes 63-68; colonne 7, lignes 1-6; figure 1 * | 1-4,6, 8,9 | |

DOMAINES TECHNIQUES RECHERCHES (Int. Cl. 3)

Le présent rapport de recherche a été établi pour toutes les revendications

| Lieu de la recherche LA HAYE | Date d'achèvement de la recherche 21-06-1983 | Examinateur PERROTTA A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82